# EUROPEAN PATENT APPLICATION

(11) **EP 4 546 899 A1**
(43) Date of publication of application: **30.04.2025**
(21) Application number: 23205828.9
(22) Date of filing: 25.10.2023
(51) Int. Cl.: H04W 56/00

(54) **METHOD FOR PROVIDING A TIMING-RELATED SERVICE AND/OR A TIMING DELIVERY SERVICE USING AT LEAST ONE MOBILE COMMUNICATION NETWORK, SYSTEM OR MOBILE COMMUNICATION NETWORK, USER EQUIPMENT, PROGRAM AND COMPUTER-READABLE MEDIUM**

(71) Applicant: Deutsche Telekom AG, 53113 Bonn (DE)
(72) Inventor: COLOM IKUNO, Josep, 2100 Korneuburg (AT); IMLAU, Helmut, 27299 Langwedel (DE)
(74) Representative: Schwöbel, Thilo K.

(57) **Abstract**

The present invention relates to a method for providing a timing-related service and/or a timing delivery service using at least one mobile communication network,
wherein the at least one mobile communication network serves a plurality of user equipments,
wherein the at least one mobile communication network comprises, or is associated or assigned to, at least one synchronization entity or functionality, wherein the at least one synchronization entity or functionality transmits and/or receives synchronization messages in order to provide, regarding the plurality of user equipments, at least one implementation of a timing service over 5G functionality,
wherein, in order to provide the timing-related service and/or the timing delivery service in a specific part of the at least one mobile communication network, the method comprises the following steps:
-- the at least one mobile communication network is aware about the implementation or the plurality of implementations of the timing service over 5G functionality regarding the specific part of the at least one mobile communication network,
-- regarding the specific part of the at least one mobile communication network the appropriate implementation or implementations of the timing service over 5G functionality is chosen by the mobile communication network.

## Description

### BACKGROUND

The present invention relates a method for providing a timing-related service and/or a timing delivery service using at least one mobile communication network, wherein the at least one mobile communication network serves a plurality of user equipments, wherein the at least one mobile communication network comprises, or is associated or assigned to, at least one synchronization entity or functionality, wherein the at least one synchronization entity or functionality transmits and/or receives synchronization messages in order to provide, regarding the plurality of user equipments, at least one implementation of a timing service over 5G functionality.

Furthermore, the present invention relates to a system or to a telecommunications network for providing a timing-related service and/or a timing delivery service using at least one mobile communication network, wherein the at least one mobile communication network serves a plurality of user equipments, wherein the at least one mobile communication network comprises, or is associated or assigned to, at least one synchronization entity or functionality, wherein the at least one synchronization entity or functionality transmits and/or receives synchronization messages in order to provide, regarding the plurality of user equipments, at least one implementation of a timing service over 5G functionality.

Furthermore, the present invention relates to a corresponding user equipment as well as to a program and to a computer-readable medium for operating a mobile communication network and/or a user equipment according to the inventive method.

The present invention relates to the area of telecommunications networks, especially wireless telecommunications networks or mobile communication networks. Such conventionally known telecommunications networks or mobile communication networks, typically comprise (or are, at least, assigned to or related to) a core network, or core network components, as well as a (radio) access network, wherein the (radio) access network typically comprises a plurality of base station entities.
Additionally, mobile communication networks typically comprise control plane functions (typically associated with the core network or core network components of the mobile communication network) that are controlling the data packet forwarding of user plane data packets; such user plane data packets typically being transmitted, between the user equipment and the mobile communication network, both in uplink direction (i.e. from the user equipment towards the mobile communication network or, through the mobile communication network, to a data network) as well as in downlink direction (i.e. towards the user equipment).
Currently known mobile communication networks, in principle, support time sensitive communications (TSC) as well as time synchronization procedures, e.g. 3GPP TS 23.501, using a 5G System (5GS) to deliver timing service over 5G (5TS) in a limited way.
However, in conventionally known mobile communication networks, the deployment of timing and synchronization functionalities might be realized in a quite heterogenous and/or complex manner in practice as there might be multiple variants - especially network architectural variants - realized in order to provide timing services, depending on user equipment capability, network deployment and/or network topology. Hence, how to specifically and actually deliver timing services over 5G in an efficient manner and, thus, efficiently realize 5TS is not clear in a generally applicable manner, thus preventing a generalized approach to automatically realize an end-to-end (E2E) implementation.

### SUMMARY

An object of the present invention is to provide an effective and simple approach for providing a timing-related service and/or a timing delivery service, using at least one mobile communication network, comparatively easily and in an efficient manner, in order to operate the user equipment (with the mobile communication network) and/or to operate related applications executed by the user equipment, i.e. to enable an operator to provide timing service over 5G (5TS) in the most resource-efficient way, and, to a customer of such network services, an easy-to-use service. A further object of the present invention is to provide a corresponding system or mobile communication network, a corresponding user equipment, and a corresponding program and computer-readable medium.

The object of the present invention is achieved by a method for providing a timing-related service and/or a timing delivery service using at least one mobile communication network, wherein the at least one mobile communication network serves a plurality of user equipments, wherein the at least one mobile communication network comprises, or is associated or assigned to, at least one synchronization entity or functionality, wherein the at least one synchronization entity or functionality transmits and/or receives synchronization messages in order to provide, regarding the plurality of user equipments, at least one implementation of a timing service over 5G functionality, wherein, in order to provide the timing-related service and/or the timing delivery service in a specific part of the at least one mobile communication network, the method comprises the following steps:
-- the at least one mobile communication network is aware about the implementation or the plurality of implementations of the timing service over 5G functionality regarding the specific part of the at least one mobile communication network,
-- regarding the specific part of the at least one mobile communication network the appropriate implementation or implementations of the timing service over 5G functionality is chosen by the mobile communication network.

It is thereby advantageously possible, according to the present invention, that - by means of using a 5G network to deliver timing and synchronization information - accurate synchronization is able to be provided to a large number of heterogeneous devices, especially heterogeneous devices, with flexibility regarding device capability, location, distribution, and mobility. This especially allows such devices to act in a synchronized way because they all work in the same time domain, i.e. they are aware of the same time, derived from a master clock (or centralized clock) or master clock ensemble (or centralized clock ensemble).
Especially, it is thereby advantageously possible to realize more complex use cases including:
-- regarding the uplink direction, e.g., a central control system can correctly time align information received from multiple sources, especially radio access network nodes or devices connected thereto, or user equipments or devices that are connected to such user equipments,
-- regarding the downlink direction, e.g., devices (especially radio access network nodes and/or user equipment or devices connected thereto) can be steered to act in specific moments in time, with the assurance that all devices will react in a synchronized manner,
-- regarding a combination of both uplink and downlink direction, e.g., it is advantageously possible to realize distributed systems that are enabled to be time-synchronized, as well as combined with device-to-device (D2D) communication and/or device-to-network relaying.
Especially, it is thereby advantageously possible to provide for an implementation or for a use of a mobile communication network such that a 5G network can be leveraged for additional, qualitatively different services based on timing, synchronization and/or comparatively accurately synchronized clock entities or functionalities - i.e. value-added services compared to the service of just providing network connectivity.
According to the present invention, especially the following fields or areas of application - however without limitation thereto - might benefit from a more flexible, easier and less costly availability of (comparatively accurate) timing, synchronization and/or synchronized clock services:
-- vehicular communications, especially road vehicles and/or watercraft and/or aircraft, especially crewed or uncrewed aerial vehicles (UAVs),
-- relaying of state information for monitoring of systems (e.g. digital twins),
-- providing backup for any systems with primary time and timing via global navigation satellite system or other sources.

In conventionally known mobile communication networks, it is possible to deliver timing to radio access network nodes; however, the deployment of timing and synchronization functionalities in currently known 5G networks is quite complex in practice.
Furthermore, there are multiple (especially network architectural) variants with which timing services can be realized, depending on user equipment capability, network deployment and network topology. Hence, how to specifically and actually deliver timing services over 5G and, thus, realize 5TS is not clear in a generally applicable manner, and, especially, it cannot be automated end-to-end (E2E) unless the specifically used architectural variant is known and exactly which variant(s) should be used (especially regarding a specific part of the at least one mobile communication network). Furthermore, current network deployment typically already include a timing and synchronization network, which is used to synchronize network equipment. This synchronization functionality is required for the correct functioning of the network itself and is hence designed for high availability and resilience.
Timing and synchronization networks are designed for the accurate and efficient transmission of timing-related information. As such, they are not designed for the transmission of bulk data traffic, e.g. Internet traffic.

According to the present invention, it is advantageously possible to allow for a dynamic provisioning of 5TS service by means of abstracting details of the timing delivery method such that the service can be easily deployed, and, hence, is usable by a third party (or customer of the mobile communication network), especially without the third party or customer having specific knowledge of how the 5G system works and/or of how the 5TS service is actually implemented - especially regarding different parts of the mobile communication network and/or regarding different mobile communication networks involved, or parts thereof. Hence, for third parties - i.e. customers of timing services over 5G (5TS customers), using such functionality of such mobile communication networks - it is advantageously possible to use, request and/or steer such 5TS services regardless of how they are actually (locally) delivered to the respective user equipments.
Especially, it is advantageously possible, according to the present invention, to provide for a
-- a backwards-compatible deployment of 5TS timing services on the radio access network (or involving radio access network nodes),
-- without requiring changes to the existing timing and synchronization network
-- such that the need for precision time protocol, PTP, support between the radio access network (nodes) and core network, CN, locations (midhaul) is minimized, and especially:
   -- in a manner supporting user equipments with varying degrees of support for timing-related services and/or
   -- in a manner supporting also disaggregated radio access network architectures, such as, e.g., open radio access network, O-RAN, architectures and/or
   -- in a manner such that existing timing and synchronization equipment and/or networks used for network synchronization can be optimally reused for supporting the provision of 5TS timing services and/or
   -- in a manner minimizing the requirement of a precision time protocol-support for the user plane on the transport network.
   Furthermore according to the present invention, it is advantageously possible for third parties - i.e. customers of timing services over 5G (5TS customers), using such functionality of such mobile communication networks - to use, request and/or steer such service regardless of how it is actually (locally) delivered to the user equipments.

According to the present invention, a method for providing a timing-related service and/or a timing delivery service using at least one mobile communication network is proposed (i.e. either using one mobile communication network, or using a plurality of mobile communication networks, i.e. at least a first mobile communication network and a second mobile communication network). The at least one mobile communication network serves a plurality of user equipments. Furthermore, the at least one mobile communication network comprises, or is associated or assigned to, at least one synchronization entity or functionality; of course, in case that a plurality of mobile communication networks are considered, also a plurality of such synchronization entities or functionalities could be used; however, in this case, it is preferred that such plurality of synchronization entities or functionalities are used in a synchronized manner. The at least one synchronization entity or functionality transmits and/or receives synchronization messages in order to provide, regarding the plurality of user equipments, at least one implementation of a timing service over 5G functionality. According to the present invention, in order to provide the timing-related service and/or the timing delivery service in a specific part of the at least one mobile communication network, the method comprises the following steps:
-- the at least one mobile communication network is aware about the implementation or the plurality of implementations of the timing service over 5G functionality regarding the specific part of the at least one mobile communication network,
-- regarding the specific part of the at least one mobile communication network the appropriate implementation or implementations of the timing service over 5G functionality is chosen by the mobile communication network.
Hence, according to the present invention, in order to provide, e.g., a customer (of the at least one mobile communication network, e.g. a service provider that wants to provide time sensitive communications, TSC, or related services to its clients, e.g. end users or subscribers of the at least one mobile communication network) an effective interface to dynamically use and provision of timing service over 5G functionality (5TS), it is proposed that a customer-side interface is provided, allowing the customer to define the timing service capabilities it requires, such that 5TS internals (i.e. the underlying network architecture used in order implement the actual provision of the timing service over 5G functionality) are abstracted. Furthermore, a network-based logic is implemented, realizing:
-- selecting the most suitable mechanism to deliver the requested service based on, e.g., network topology and/or network availability and/or user equipment capability,
-- the subscriber changes required to realize the chosen timing service over 5G functionality or 5TS service, and
-- the instance deployment and configuration realizing the timing service over 5G functionality or 5TS service.
According to the present invention, it is especially preferred that, in order to provide an effective means to provide 5TS without access stratum timing distribution on the base station entity (gNB) and the user equipment:
-- a PTP-based timing as a service (5TS) realization, or timing service over 5G functionality, is realized via a radio access network-edge and user plane function deployment and integration with an existing timing/synchronization network - especially such that it can be optimally combined with an open radio access network-based (O-RAN-based) radio access network (timing-aware CU-UP) and/or it can be automatically deployed based on node capability, i.e. capability information of all relevant nodes, and/or network topology changes can be minimized, and
-- a network-based logic to steer traffic towards the 5TS instances for timing-related traffic, such that the synchronization network can be protected from non-sync-related traffic.

In conventionally known mobile communication networks, an accurate source of time (or a timing reference) is required to ensure a synchronous operation; without a precise, common source of time, a mobile communications system cannot work; exemplarily, a transmitter (transmitting a radiofrequency signal) is required to perform a transformation operation and/or a precoding operation; furthermore it is required to perform a sub-carrier mapping, an inverse fast Fourier transformation (IFFT), and an cyclic prefix insertion (CP insertion). Also, in order to realize time division duplexing (TDD), a comparatively high level of synchronization is required for a 5G system to operate properly. This is also true when using a common shared medium such as the air interface: in case that multiple user equipments are connected via one base station entity (or via multiple base station entities), especially gNBs, a time-frequency grid composed of resource elements (REs) is used (for specific purposes such as channel estimation, signaling traffic, random access, or data transfer) to allocate specific physical transmission resources that are tied, respectively, to specific frequency (sub-)carriers and time spans.
The introduction of orthogonal frequency-division multiple access (OFDMA) and TDD has even increased the need for user equipments to synchronize in frequency and time. In view of such synchronization needs, conventionally known mobile communication networks typically comprise - besides the radio access network and the core network - a transport Network (TN) such that a time reference (or synchronization entity or functionality) is used, wherein, by means of transmitting and/or receiving synchronization messages, clock entities or functionalities and/or base station entities and/or user equipments are able to be comparatively accurately synchronized (especially using the precision time protocol, PTP) in order to be operated and in order to cooperate in a coordinated manner to operate the mobile communication network. Especially, a transport network, often a transport network physically or at least logically separated from the one transporting user plane traffic, is used to transmit the synchronization messages between the synchronization entity or functionality and the various recipients of timing and synchronization, i.e. the transport network is precision time protocol-aware, and between the base station entity serving a user equipment, the timing synchronization is provided in the direction from the base station entity towards the user equipment. Hence, the timing/synchronization information is able to be propagated from a source, such that a common time reference is used both in the radio access network and in the user equipment; timing and synchronization is, in a typical mobile network, not relevant for the core network.
Some important clock attributes, which can be used to characterize the elements of a timing network, e.g. such as listed in ITU-T Recommendation G.8275.1, are:
-- frequency and time traceability flags (phase/time traceability information). These flags are typically included/implicity within a given clockClass value. The frequencyTraceable flag present in the header of the PTP messages is defined in G.8275 and indicates if the PTP clock is a T-GM that is traceable to a PRTC in locked mode or if the PTP clock is a T-GM or a T-BC in holdover or free-run mode that has a timescale traceable to a primary reference clock (PRC),
-- clockClass: which maps to values of frequency traceability and time traceability e.g., clockClass 6 describes a T-GM connected to a PRTC in locked mode (e.g., PRTC traceable to GNSS)
-- clockAccuracy e.g., 0x20 for a T-GM connected to an enhanced primary reference time clock (ePRTC) in lockedmode (i.e., ePRTC traceable to global navigation satellite system (GNSS))
-- offsetScaledLogVariance e.g., 0x4B32 for a T-GM connected to an ePRTC in lockedmode (i.e., ePRTC traceable to GNSS), corresponding to TDEV of 10 ns, at observation interval of 1 000 000 s.
Hence, timing and synchronization is a crucial part of the mobile communication network. It is for this reason that conventionally known mobile communication networks are typically networked so that different types of traffic can be provided via different networks:
-- control plane (CP): Used for transporting signaling traffic between radio access network and core network (CN) or management systems;
-- user plane (UP): Used for transporting data traffic between user equipments and the core network;
-- timing and synchronization: Used for transporting timing and synchronization traffic. The control plane traffic and the user plane traffic can be typically transported via the same physical routers (as avoiding collision or congestion it is a matter of applying the correct quality-of-service), whereas different VLANs or QoS differentiation is used. However, timing and synchronization traffic requires specific support by the corresponding transport network; precision time protocol (PTP) is typically used, of which the IEEE 1588-based ITU-T specified telecom profiles are the most well-known. The transport network requires PTP-aware network elements such as boundary clocks or transparent clocks as well as support of PTP across the entire time distribution chain ("full timing support from the network" as described in ITU-T G.8275.1, or, "partial timing support from the network as described in ITU-T G.8275.2).
While it would be technically feasible to use Global Navigation Satellite System (GNSS) as a timing source of a telecommunications network and hence not need a network for distribution of timing and synchronization, this would result in the whole network being vulnerable to jamming and any availability issues related to GNSS; in addition, satellite-based communication can only be reliably used in a limited way, especially in indoor environments, due to propagation challenges and thus should not be relied on for such critical applications, especially indoors.

According to the present invention, it is advantageously possible and preferred that the timing-related service and/or the timing delivery service is provided, by the at least one mobile communication network, to a third party,
wherein, by means of a specific request, the third party requests the timing-related service and/or the timing delivery service to be provided by the at least one mobile communication network,
wherein especially the specific request refers to the specific part of the at least one mobile communication network,
wherein especially the timing-related service and/or the timing delivery service is provided as a timing-as-a-service functionality, wherein especially a comparatively accurate time base is able to be distributed by the plurality of user equipments.

According to the present invention, it is thereby advantageously possible that the inventive method is able to be performed in a flexible and efficient manner.

According to the present invention, it is furthermore advantageously possible and preferred that the specific request and/or the specific part of the at least one mobile communication network refers to at least one of the following:
-- a specific geographical area,
-- a specific network slice within a public land mobile network and/or referring to a mobile network identifier, especially a public land mobile network identifier, or a plurality thereof,
-- a specific mobile network identifier, especially a public land mobile network identifier, or a plurality thereof,
-- a specific radio cell, or a plurality thereof,
-- a specific tracking area, or a plurality thereof.

According to the present invention, it is thereby advantageously possible that the inventive method is able to be performed in a flexible and efficient manner.

According to the present invention, it is furthermore advantageously possible and preferred that the specific request refers to a specific class or group of the plurality of user equipments and wherein, in order to provide the timing-related service and/or the timing delivery service to the specific class or group of the plurality of user equipments, the method comprises the following steps:
-- the at least one mobile communication network is aware about the capabilities of the plurality of user equipments,
-- regarding the specific class or group of the plurality of user equipments the appropriate implementation or implementations of the timing service over 5G functionality is chosen by the mobile communication network.

According to the present invention, it is thereby advantageously possible that the inventive method is able to be performed in a flexible and efficient manner.

According to the present invention, it is furthermore advantageously possible and preferred that the specific request comprises or is related to at least one of the following:
-- clockAccuracy,
-- clockClass,
-- offsetScaledLogVariance,
-- frequency and time traceability (phase/time traceability information) flags,
-- primary source, e.g. PRTC/GNSS, enhanced PRTC,
-- maximum error,
-- resiliency.

According to the present invention, it is thereby advantageously possible that the inventive method is able to be performed in a flexible and efficient manner.

According to the present invention, it is furthermore advantageously possible and preferred that the specific request is received by a network exposure function, NEF, of the at least one mobile communication network and/or by an operations support system, OSS, of the at least one mobile communication network,
wherein especially charging, in view of the specific request, is based on coverage, number of subscribers, maximum error and/or resiliency.

According to the present invention, it is thereby advantageously possible that the inventive method is able to be performed in a flexible and efficient manner.

According to the present invention, it is furthermore advantageously possible and preferred that the at least one mobile communication network comprises, besides a core network, an access network comprising a plurality of base station entities (111, 112), wherein each one of the plurality of user equipments is served by at least one base station entity,
wherein providing the timing-related service and/or the timing delivery service by means of providing at least one implementation of the timing service over 5G functionality involves the possibility to comparatively accurately synchronize clock entities or functionalities by means of exchanging synchronization messages, especially with the at least one synchronization entity or functionality.

According to the present invention, it is thereby advantageously possible that the inventive method is able to be performed in a flexible and efficient manner.

According to the present invention, it is furthermore advantageously possible and preferred that the implementation of a timing service over 5G functionality at least involves one of the following implementations:
-- the exchange, in order to provide the timing service over 5G functionality, of the synchronization messages using a timing distribution network that is separated, especially physically or logically separated, from the transport network transmitting the user plane traffic,
-- the exchange, in order to provide the timing service over 5G functionality, of the synchronization messages is access stratum-based, especially based on access stratum control plane communication between base station entities and the plurality of user equipments, especially using, or based on, system information block, SIB, especially SIB9,
-- the exchange, in order to provide the timing service over 5G functionality, of the synchronization messages is (g)PTP-based, especially based on and/or using the precision time protocol, (g)PTP,
-- the exchange, in order to provide the timing service over 5G functionality, of the synchronization messages based on core network-based user plane communication,
-- the exchange, in order to provide the timing service over 5G functionality, of the synchronization messages based on a timing-aware packet data unit session anchor entity or functionality, especially at or as part of or co-deployed with a base station entity serving a concerned user equipment.

According to the present invention, it is thereby advantageously possible that the inventive method is able to be performed in a flexible and efficient manner.

According to the present invention, it is furthermore advantageously possible and preferred that the at least one mobile communication network - being aware about
-- the implementation or the plurality of implementations of the timing service over 5G functionality regarding the specific part of the at least one mobile communication network, especially related to the network nodes or instances serving the specific part of the at least one mobile communication network and/or
-- the capabilities of the plurality of user equipments, especially regarding the implementation or the plurality of implementations of the timing service over 5G functionality -
   involves a mapping function, especially involving or generating one or more mapping actions, especially one or more mapping actions related to delivering the timing service over 5G functionality - especially via each implementation of the timing service over 5G functionality - for one or a plurality of the following:
-- gNB(s) and/or cells to use,
-- one frequency or more frequencies to be used,
-- user equipments or network nodes that need to be (re-)configured,
-- network nodes or instances that are available,
-- deployment locations of new network instances, especially user plane network instances,
-- network nodes or instances that need to be deployed.

According to the present invention, it is thereby advantageously possible that the inventive method is able to be performed in a flexible and efficient manner.

Furthermore, the present invention relates to a system or to a mobile communication network for providing a timing-related service and/or a timing delivery service using at least one mobile communication network,
wherein the at least one mobile communication network serves a plurality of user equipments,
wherein the at least one mobile communication network comprises, or is associated or assigned to, at least one synchronization entity or functionality, wherein the at least one synchronization entity or functionality transmits and/or receives synchronization messages in order to provide, regarding the plurality of user equipments, at least one implementation of a timing service over 5G functionality,
wherein, in order to provide the timing-related service and/or the timing delivery service in a specific part of the at least one mobile communication network, the system of mobile communication network is configured such that:
   -- the at least one mobile communication network is aware about the implementation or the plurality of implementations of the timing service over 5G functionality regarding the specific part of the at least one mobile communication network,
   -- regarding the specific part of the at least one mobile communication network the appropriate implementation or implementations of the timing service over 5G functionality is chosen by the mobile communication network.

Furthermore, the present invention relates to a user equipment for being operated with (or as part of, or connected to) an inventive system or an inventive mobile communication network and/or for being used in an inventive method.

Additionally, the present invention relates to a program comprising a computer readable program code which, when executed on a computer or on a synchronization entity or functionality or on a network node of the core network of the mobile communication network or on a network node of the access network of the mobile communication network, especially a timing-aware packet data unit session anchor entity or functionality, or on a base station entity or on a user equipment, and/or in part on a synchronization entity or functionality and/or in part on a network node of the core network of the mobile communication network and/or in part on a network node of the access network of the mobile communication network, especially a timing-aware packet data unit session anchor entity or functionality and/or in part on a base station entity and/or in part on a user equipment, causes the computer or the synchronization entity or functionality or the network node of the core network of the mobile communication network or the network node of the access network of the mobile communication network, especially the timing-aware packet data unit session anchor entity or functionality or the base station entity or the user equipment, to perform the inventive method.

Still additionally, the present invention relates to a computer-readable medium comprising instructions which, when executed on a computer or on a synchronization entity or functionality or on a network node of the core network of the mobile communication network or on a network node of the access network of the mobile communication network, especially a timing-aware packet data unit session anchor entity or functionality, or on a base station entity or on a user equipment, and/or in part on a synchronization entity or functionality and/or in part on a network node of the core network of the mobile communication network and/or in part on a network node of the access network of the mobile communication network, especially a timing-aware packet data unit session anchor entity or functionality and/or in part on a base station entity and/or in part on a user equipment, causes the computer or the synchronization entity or functionality or the network node of the core network of the mobile communication network or the network node of the access network of the mobile communication network, especially the timing-aware packet data unit session anchor entity or functionality or the base station entity or the user equipment, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network comprising an access network, a core network and a user equipment, wherein the core network typically comprises a number of network functions or services, and wherein the (radio) access network likewise comprises a number of base station entities providing radio coverage for specific geographical areas, respectively.
Figure 2 schematically illustrates an architecture to distribute timing in conventionally known mobile communication networks.
Figure 3 schematically illustrates an architecture to distribute timing in conventionally known mobile communication networks by means of a timing-as-a-service functionality using existing operator infrastructure.
Figures 4 and 5 schematically illustrate two different possibilities to distribute timing in conventionally known mobile communication networks: 5G access stratum-based time distribution (Figure 4) and (g)PTP-based time distribution (Figure 5).
Figures 6 and 7 schematically illustrate different architectures to distribute timing according to a possible implementation of the present invention, using a timing-aware packet data unit session anchor entity or functionality.
Figure 8 schematically illustrates an example of the provisioning of 5TS services, by the mobile communication network towards a third party, according to the present invention.
Figures 9 and 10 schematically illustrate further details regarding the provisioning of 5TS services, by the mobile communication network towards a third party, according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

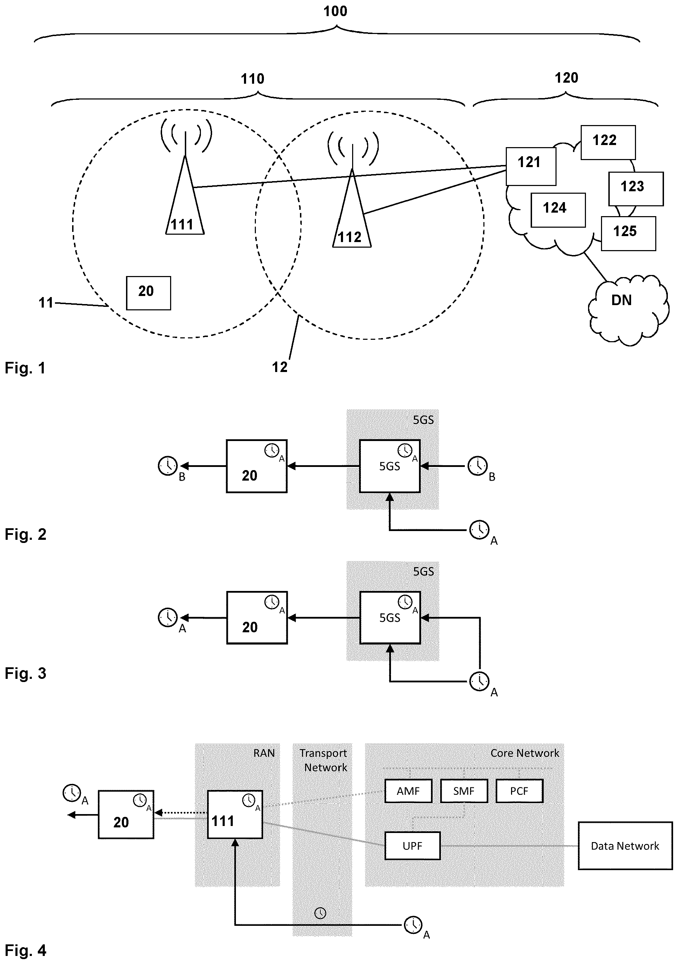

In Figure 1, a telecommunications network 100 comprising an access network 110, and a core network 120 is schematically shown. The telecommunications network 100 or also mobile communication network 100 is typically realized as a cellular network or cellular mobile communication network 100. The mobile communication network 100, especially the core network 120, typically comprises a number of network functions or services 121, 122, 123, 124. Examples of such network functions or services 121, 122, 123, 124 include, e.g., an access and mobility management function, AMF, and/or a session management function, SMF, and/or a policy and charging function, PCF, and/or a user plane function, UPF - especially in case of a 5G telecommunications network, the core network 120 might also be called a 5G core (system) or a 5G system (5GS), and the access network 110 or radio access network 110 a next-generation radio access network, NG-RAN. The access network 110 comprises a plurality of radio cells 11, 12, i.e. geographical areas served, respectively, by base station entities. In the exemplary situation or scenario shown in Figure 1, a first base station entity 111 generates or is associated with or spans the first radio cell 11, and a second base station entity 112 generates or is associated with or spans the second radio cell 12. The base station entities 111, 112 typically realize gNB functionality or next-generation gNB functionality, and are shown, in Figure 1, primarily as stationary base station entities 111, 112; however, the stationarity of the base station entities is not mandatory, i.e. the base station entities 111, 112, or at least part thereof, might also be realized as non-stationary base station entities or realize non-stationary base station entity functionality, where at least a part of such base station entity functionality (especially antenna entities or functionalities) might be located, e.g., aboard of non-terrestrial network infrastructure elements, such as satellites and/or high-altitude platforms. The telecommunications network 100 is typically connected to a plurality of user equipments 20 (or, rather, the user equipments 20 are connected to the telecommunications network 100), only one of which is schematically shown in Figure 1 for the sake of simplicity. Figure 1 additionally shows a data network DN being connected to the mobile communication network 100, wherein, typically, the user equipment 20 is able to be connected - using the mobile communication network 100 - to the data network DN.

Figure 1 primarily shows the simple situation that the user equipment 20 is connected to its home network 100, especially its home public land mobile network, i.e. the telecommunications network 100 represented in Figure 1 corresponds to the home network of the user equipment 20. However, the telecommunications network 100 (to which the user equipment 20 is connected, or, rather, to whose radio access network 120 the user equipment 20 is connected) might also correspond to a visited network or visited public land mobile network, and the home network or home public land mobile network of the user equipment 20 would, in this case, correspond to another telecommunications network connected to the telecommunications network 100, however, such other telecommunications network is not shown in Figure 1.

According to the present invention, the network nodes of the radio access network 110 (or the functionality of the radio access network 110) might be realized in a rather disaggregated manner (or disaggregated radio access network architecture), by means of a plurality of radio access network nodes that are able to interact in order to provide communication services to the user equipment 20 (or, rather, also to other user equipments not explicitly shown in Figure 1) being connected to or served by the telecommunications network 100.

As has already been said, both in conventionally known mobile communication networks as well as according to the present invention, timing and synchronization is an essential part of the functionality of the mobile communication network.
Furthermore, again both in conventionally known mobile communication networks as well as according to the present invention, the control plane (CP) and the user plane (UP) are separated, such that user traffic can be sent with different reliability and/or a quality-of-service level compared to signaling (using of the N1/N2 interface or reference point for signaling traffic (control plane) between the radio access network 110 and the core network 120 as opposed to using the N3 interface or reference point for user plane traffic between the radio access network 110 and the core network 120). In the Uu interface (Uu; air interface between the user equipment 20 and the base station entities 111, 112), both planes share the same physical channel but are logically separated, such that e.g., different channel coding, code rates and modulation can be used for signaling traffic (as losing a signaling message is much more critical than losing a data packet; in the worst case, such losing of a signaling message could lead to a connectivity/connection failure, as opposed to losing a single data traffic packet).
Starting with 3GPP Release 17, it is possible to use a 5G system (5GS) to distribute a timing or synchronization information by means of transporting a non-system time base. This architecture is schematically represented in Figure 2, which shows the 5GS being used to provide timing service to the user equipment 20: While an initial timing source (clock A) - representing the system time base, i.e. the time base essential for the mobile communication network 100 to properly work - is (obviously) necessary for the internal functioning of the network 5GS, it is possible to use the 5GS to transport another timing source (clock B) - also called non-system time base -, which the user equipment 20 can then further distribute (indicated by means of clock B and an arrow emanating from the user equipment 20 towards the left hand side of Figure 2).
In case that a considered mobile communication network 100 already has a timing distribution network, it is, hence, possible and advantageous to use the 5GS network to offer timing-as-a-service, with time being offered to customers of that mobile communication network 100; this situation is schematically shown in Figure 3, which, hence, shows the possibility of the provision of a timing-as-a-service functionality using existing operator infrastructure of the mobile communication network 100, i.e. the 5GS. Here, two lines (or arrows, emanating from the initial timing source, clock A) are shown because with the conventionally known approaches, the existing "internal" timing ("system time base") used for internal 5GS functioning is separated - or, rather, separately distributed, or transported - from the service that is being offered as a service to the user equipment 20.

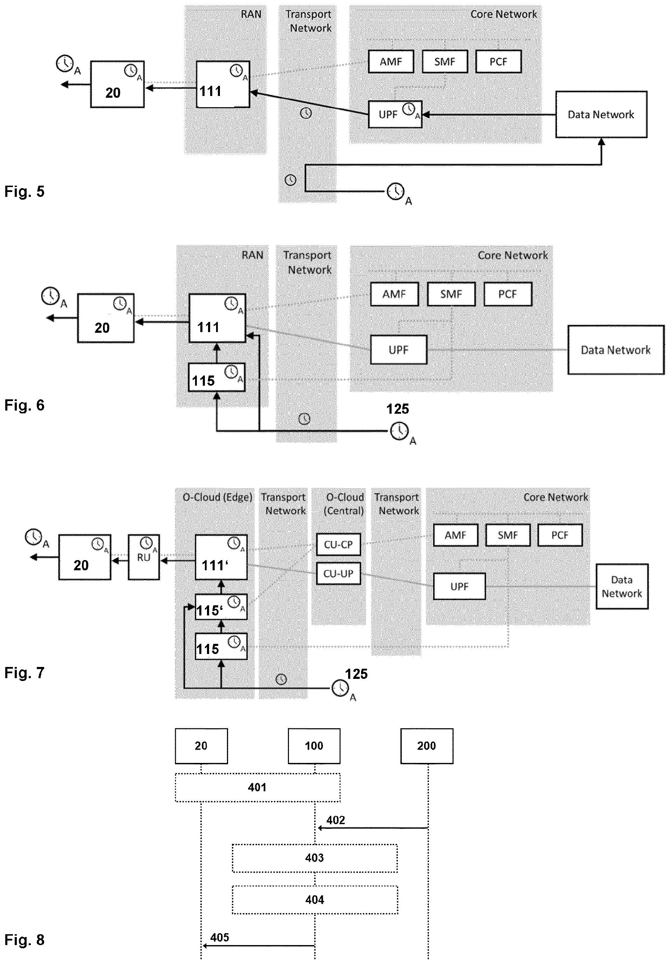

Furthermore, both in conventionally known mobile communication networks as well as according to the present invention, in order to distribute time (i.e. timing information or synchronization) via a 3GPP network, the following two solutions are possible that are schematically shown in Figures 4 and 5 (clause 5.27.1 of TS 23.501): 5G access stratum-based time distribution (Figure 4) and (g)PTP-based time distribution (Figure 5). In both these figures, the 5GS or mobile communication network 100 comprises the radio access network 110/RAN, the core network 120/Core Network and the transport network. In Figures 4 and 5, the core network 120/Core Network is shown to comprise a number of network functions or services, namely AMF, SMF, PCF, and UPF and being connected to the data network. In Figures 4 and 5, the control plane (CP) and the user plane (UP) are separated, and represented differently: control plane connections or communication is/are represented by means of dotted lines or arrows, whereas user plane connections or communication is/are represented by means of drawn-through lines or arrows.
The access stratum (AS) refers to the logical interface between the user equipment 20 and the radio access network RAN, i.e. the base station entity 111 (that is serving the user equipment 20). Hence, in case of 5G access stratum-based time distribution, shown in Figure 4, timing information is distributed to the user equipment 20 via the control plane (i.e. the (time-distribution representing) arrow, in Figure 4, between the serving base station entity 111 and the user equipment 20 corresponds to the dotted "control plane arrow"). In this case, it is implementation-specific (i.e. not standardized) how to further distribute the 5G timing to devices connected to the user equipment 20. One of the main ways this timing information is able to be conveyed to the user equipment 20 is via the SIB9 system information block.
The time distribution shown in Figure 5 is core network-based and, also, based on the (generic) precision time protocol, i.e. (g)PTP-based, and the precision time protocol (PTP) packet-based protocol is used to distribute the time information to the user equipment 20 via the user plane, i.e. via the user plane function UPF (of the core network 120) (i.e. the (main time-distribution representing) arrow, in Figure 5, between the serving base station entity 111 and the user equipment 20 corresponds to the drawn-through "user plane arrow"); this process follows the applicable profiles of IEEE Std 802.1AS or IEEE Std 1588, and this method relies on the 5G access stratum-based time distribution method to synchronize certain elements of the user equipment 20, which does not send PTP packets over the Uu interface, instead relying on AS signaling (even if the gNB synchronization itself could be realized via PTP). Regarding the representation of Figure 5, it is assumed that the time propagated to the user equipment 20 is the same time as used by the 5GS internally (i.e. according to Figure 3). For the more general case of multiple time domains (i.e. corresponding to the representation of Figure 2), the user plane function UPF would get an additional line; e.g. from clock B.
With regard to the time distribution shown in Figure 5: Since the user plane UP is used, the typically and conventionally used protocol stack (Figure 8.3.1-1 of 3GPP TS 23.501) requires that traffic between the radio access network RAN and the core network 120 is encapsulated; the encapsulation provides point-to-point encapsulation between a base station entity (111 or a gNB) and a (or the) user plane function UPF of the core network 120 as well as between user plane functions (UPFs), being terminated at the packet data unit session anchor (PDU session anchor, PSA - not specifically shown in Figure 5; the shown user plane function UPF could be regarded as serving as packet data unit session anchor).
In the present case, shown in Figure 5, of time distribution or timing service over 5G functionality 5TS, the (g)PTP communication (i.e. the synchronization messages) corresponds to the application protocol (i.e. the topmost layer in Figure 8.3.1-1 of 3GPP TS 23.501), which then enables connectivity to the clock (i.e. the initial timing source, clock A) beyond the N6 interface.
In order for the 5GS to interact with time sensitive networks (TSNs), 3GPP TS 23.501 defines a TSN Application function (AF); the TSN AF supports control plane translator functionality for the integration of the 5GS with a TSN network, this involves, e.g.,:
-- 5GS bridge management;
-- port and bridge management information exchange with Device-Side TSN Translator (DS-TT) or Network-Side TSN Translator (NW-TT);
-- interactions with the Centralized Network Configuration (CNC) for 5GS bridge configuration and reporting;
-- determining the time sensitive communications, TSC, assistance container and TSN quality-of-service information by mapping TSN stream(s) based on IEEE standards; the traffic pattern parameter determination may be based on PSFP (IEEE Std 802.1Q [98]) as specified in Annex I, clause 1.1 thereof.

Furthermore, both in conventionally known mobile communication networks as well as according to the present invention, it is possible to use different radio access network architectures, i.e. a different distribution of functionalities among functional components:
In case of a 5GS, the radio access network 110/RAN might be composed of base station entities (gNBs) and the core network 120 of network functions (NFs), and the interface between the radio access network 110/RAN and the user equipment 20 is radio-based (in a 5GC, termed "Uu interface"), wherein an Xn interface (or kinds of interfaces) is/are used between base station entities, and an NG interface (or kinds of NG interfaces), composed of a N1 and N2 interfaces, is/are used between the base station entities (gNBs) and the network functions (NFs).
Alternatively, a disaggregated radio access network RAN infrastructure platform definition is able to be taken from the O-Cloud (O-RAN cloud) definition of the O-RAN standard; the O-Cloud being a cloud computing platform comprising a collection of physical infrastructure nodes that meet O-RAN requirements to host the relevant O-RAN functions (such as Near-RT RIC, O-CU-CP, O-CU-UP, and O-DU), the supporting software components (such as Operating System, Virtual Machine Monitor, Container Runtime, etc.) and the appropriate management and orchestration functions.
In accordance with such disaggregation trend, a functional radio access network RAN node (i.e. a base station entity 111 or gNB) is divided (or disaggregated) in two dimensions: in CU/DU (central/distributed units) and CP/UP (control plane unit and user plane unit), the description of which can be found in TS 38.401, clause 6.1.2. In the context of the present invention, only the CU/DU (gNB centralized unit/gNB distributed unit) separation needs to be taken into account, wherein also a separation (or disaggregation) of an antenna functionality (RU - radio unit) of the gNB distributed unit DU (or a plurality of such RUs is possible.
Typically, only the DU and RU would need to be time-synchronized, as the processing of the RAN lower-layers has very tight time constraints. Also, deployments typically favor a separate deployment of the DU and CU, such that the DU can be placed on an Edge O-Cloud, whereas the CU can be more centralized and thus serve more DUs.
Accomplishing (g)PTP-based timing distribution requires additional time synchronicity for at least the CU-UP.
Reliable transmission of PTP traffic between CU-UP and DU would require support for the transport network TN between CU and DU (sometimes called midhaul), which uses the F1 interface. The new radio NR user plane protocol data, which includes the data over the F1 interface, is conveyed by GTP-U protocol means, more specifically, by means of the "NR RAN Container" GTP-U extension header (cf. 3GPP TS 38.425).

According to the present invention, it is especially preferred that a dynamic discovery of network functions or services (NFs) occurs within the 5GC and within the radio access network (or O-RAN).
Regarding 5GC, in order to provide for such dynamically provisioning of network functions or services (NFs) or to dynamically select an existing network function or service (NF) based on predefined criteria, it is necessary that the NF-capabilities are published and discoverable. For that, typically the network function repository function (NRF) is used; in conventionally known mobile communication networks, the currently available discovery parameters are defined - for a user plane function - in 3GPP TS 29.510 (v16.3.0 from June 2023), where no timing-related parameter is considered, cf. Table 6.1.6.2.13-1 from 3GPP TS 29.510 and the definition of type Upflnfo.
Regarding the radio access network, especially O-RAN architecture, there are currently no standardized procedures to perform dynamic discovery/selection of components in RAN (also not in the O-RAN specification).

According to an implementation of the 5TS functionality according to the present invention, the user equipment 20 is operated (connected to the mobile communication network 100) and/or the mobile communication network 100 is operated such that an accurate synchronization is able to be provided to a large number of devices (and, especially, with flexibility regarding location, distribution, and mobility of such devices) by means of using the 5G network to deliver the timing and synchronization information and by means of using at least one synchronization packet data unit session being terminated by a timing-aware packet data unit session anchor entity or functionality at or as part of or co-deployed with the base station entity 111 serving the user equipment 20.
This is specifically represented in Figures 6 and 7 that schematically illustrate different architectures (or architectural variants according to the present invention) to distribute timing according to the present invention, using the timing-aware packet data unit session anchor entity or functionality.
In a manner analogous to Figures 4 and 5, also Figures 6 and 7, respectively, schematically and exemplarily represent the 5GS or mobile communication network 100 comprising the radio access network 110/RAN, the core network 120/"Core Network" and the transport network; the core network 120/"Core Network" is shown to comprise a number of network functions or services - namely access and mobility management function AMF, session management function SMF, policy and charging function PCF, and user plane function UPF - and being connected to the data network. And also analogous to Figures 4 and 5, in Figures 6 and 7, the control plane (CP) and the user plane (UP) are separated, and represented differently: control plane connections or communication is/are represented by means of dotted lines or arrows, whereas user plane connections or communication is/are represented by means of drawn-through lines or arrows.
The variants of the time distribution shown in Figures 6 and 7 realize the time distribution functionality by means of deploying a packet data unit session anchor (PSA) user plane function UPF (also called 5TS UPF, or timing-aware packet data unit session anchor entity or functionality 115) terminating a packet data unit session (PDU session) - especially a precision time protocol PTP-PDU session -, wherein the timing-aware packet data unit session anchor entity or functionality 115 is co-deployed with the base station entity 111 or gNB (serving the considered user equipment 20), i.e. it might also be co-deployed (or part of) a functionality (or part) of such base station entity or gNB.
Hence, in both variants shown in Figures 6 and 7, the mobile communication network 100 comprises (or is associated or assigned to) a synchronization entity or functionality 125, and this synchronization entity or functionality 125 transmits and/or receives - especially in accordance with the (generic) precision time protocol - synchronization messages (cf. the arrows, emanating from the synchronization entity or functionality 125, being represented with a clock icon or symbol). By means of exchanging the synchronization messages, various clock entities or functionalities are provided with the possibility to comparatively accurately synchronize with each other and, especially, with the synchronization entity or functionality 125 (indicated, in Figures 6 and 7, by means of a clock icon or symbol and letter "A").
Hence, according to both architectural variants shown in Figures 6 and 7, a radio access network-deployed realization of a (especially precision time protocol-based) 5TS functionality via the user plane UP is possible on a 5G network, while avoiding the requirement of a precision time protocol-support for the user plane on the transport network. Additionally, Figure 6 (and, also, Figure 7) schematically shows - by means of an arrow emanating from the user equipment 20 towards the left hand side of Figures 6 and 7 - that the user equipment 20 is able to transport the timing source of the synchronization entity or functionality 125 (clock A) towards a connected device (not shown in Figures 6 and 7).

According to the solution or variant represented in Figure 6, the PSA UPF (5TS UPF) functionality (that is terminating PTP PDU sessions, i.e. acting as packet data unit session anchor) - i.e. the timing-aware packet data unit session anchor entity or functionality 115 - is co-deployed with the serving base station entity 111 (especially a gNB) of the user equipment 20. Such co-deployment is schematically represented, in Figure 6, by means of the both the (serving) base station entity 111 and the timing-aware packet data unit session anchor entity or functionality 115 being part of the radio access network 110.
It is thereby advantageously possible that the 5TS UPF (i.e. the timing-aware packet data unit session anchor entity or functionality 115) can locally network with the (serving) base station entity 111 (or gNB) and as such, reduce the need of PTP-capable network equipment (of the transport network). Additionally, (especially in case that a precision time protocol-aware transport network exists) an already existing precision time protocol-aware transport network (i.e. existing at the site of the base station entity 111 or gNB) can be reused to provide the 5TS UPF (i.e. the timing-aware packet data unit session anchor entity or functionality 115) with timing synchronization; hence the inventive solution is TN-backwards-compatible. Additionally, the precision time protocol-traffic can be served by the existing core network elements, which advantageously require no change. The 5TS UPF (i.e. the timing-aware packet data unit session anchor entity or functionality 115) can even be steered/controlled by existing core network elements (e.g. the session management function, SMF - this being schematically indicated, in Figure 6, by means of a dotted line joining the timing-aware packet data unit session anchor entity or functionality 115 and the session management function SMF).
Furthermore, in order to also avoid the need for precision time protocol-aware transport network elements between the gNB centralized unit (CU) and gNB distributed unit (DU) to support 5TS, the solution or variant schematically shown in Figure 7 exemplarily shows a solution that extends the one shown in Figure 6, wherein, again, a transport network-backwards-compatible 5TS functionality is enables in s 5GS, albeit with a disaggregated radio access network RAN: I.e. the gNB centralized unit CU (CU-CP and CU-UP) is disaggregated from the other functionalities of the base station entity 111 or gNB (namely in an O-Cloud (Central) location or domain), and - as part of an O-Cloud (Edge) location or domain - the timing-aware packet data unit session anchor entity or functionality 115 interacts with the timing-aware gNB centralized unit user plane, 115', which in turn interacts with a gNB distributed unit 111', wherein especially also the timing-aware gNB centralized unit user plane 115' (i.e. besides the timing-aware packet data unit session anchor entity or functionality 115, or, separately thereof) is connected to the synchronization entity or functionality 125, especially for exchanging synchronization messages. Additionally, Figure 7 shows a radio unit RU in between the gNB distributed unit, DU 111' and the user equipment 20.

According to all variants of the present invention, it is necessary to specifically route the precision time protocol-related traffic in a manner separated from other traffic, especially in a manner such that using non-PTP aware transport network elements is avoided (as this would reduce the (timing) accuracy, and in the worst case break the synchronization) and/or such that the usage of PTP-aware transport network elements is minimized (as PTP-aware equipment is more expensive; it would not be cost-effective to unnecessarily use such PTP-aware transport network elements to transport common user plane traffic - e.g. internet traffic or other high-volume traffic). Hence for that, steering of precision time protocol-related user plane traffic is needed in the core network (especially in session management function SMF) and also in the radio access network RAN (if using a disaggregated radio access network, especially in the CU-CP), such that the user plane functions are chosen such that the above-mentioned requirements are fulfilled, i.e. the use of non-precision time protocol-aware transport network elements (as much as possible) avoided and the usage of precision time protocol-aware transport network elements (as much as possible) minimized. This means, in the example above, that the 5TS CU-UP (i.e. the gNB centralized unit user plane 115') and 5TS UPF (i.e. the timing-aware packet data unit session anchor entity or functionality 115) are used for precision time protocol-traffic instead of the CU-UP (of the O-Cloud (Central)) and user plane function UPF (of the Core Network). This results in a mapping for the F1 (-u) interface, i.e. applied in the CU-UP and/or the DU-UP, mapping a specific CU-UP to timing-aware packet data units, as well as in a mapping for the N3 interface, i.e. applied in the CU-UP and/or the UPF, mapping a specific UPF to timing-aware packet data units. According to the present invention, it is advantageous, that the applied mapping is controlled by:
-- the CU-CP for the F1 (-u) mapping applied at the CU-UP and/or DU
-- the SMF for the N3 mapping applied at the UPF
-- the CU-CP for the N3 mapping applied at the CU-UP

According to the present invention, it is especially preferred that - in order for a session management function (e.g. session management function SMF) to be able to select an appropriate user plane function UPF or timing-aware packet data unit session anchor entity or functionality 115 (and, correspondingly also, for CU-CP (of the O-Cloud (Central) selecting a CU-UP or selecting a gNB centralized unit user plane 115') - the following information are made available, by the 5TS UPF (timing-aware packet data unit session anchor entity or functionality 115)/5TS CU-UP (gNB centralized unit user plane 115') to the session management function/CU-CP (of the O-Cloud (Central)), either directly or via a network function or service register such as a network repository function NRF), whether the user plane function functionality (either a 5TS UPF (timing-aware packet data unit session anchor entity or functionality 115) or a user plane function UPF) supports 5TS forwarding (or not):
-- either to inform a customer about fulfillment of the agreed timing and synchronization performance parameter, e. g. as "yes" or "no", or,
-- if 5TS is supported, what clock attributes (e. g. as known from IEEE1588/ITU-T G.827x towards user equipment 20) are supported, or what sub-set of the parameters are supported; parameters explicitly considered are, e.g., related to: clockAccuracy, clockClass, offsetScaledLogVariance, frequency and time traceability (phase/time traceability information) flags.
Among a plurality of user plane function entities or functionalities (UPFs or CU-UPs), this allows a control plane function (session management function SMF or CU-CP) to select an appropriate UP function (or user plane function functionality).

Additionally, while a given software (instance) may support a given 5TS-related functionality, such functionality is dependent on hardware-based functionality the underlying host hardware (and/or virtualization platform) may or may not support; according to the present invention, it is advantageously possible that the information related or associated to a user plane function (e.g. UPF or CU-UP) registered in a register function (e.g. NF profile registered on a network repository function, NRF) contains capability information of the HW/host platform hosting the NF (typically SW-based), or that it reflects the capability of the underlying host, e.g. O-Cloud in the O-RAN architecture, especially related to the three key parameters clockAccuracy, clockClass, offsetScaledLogVariance.

Hence, according to the present invention, it is especially preferred that an additional implementation or possibility is provided for effectively distributing 5TS timing information to base station entities and to user equipments. Thus, drawbacks of presently known (and used) such 5TS timing information distribution implementations (i.e. the use of (g)PTP-based time distribution and 5G access stratum-based time distribution) are possible to be avoided according to the present invention.
These drawbacks include - in case of trying to apply existing (g)PTP-based time distribution - the following:
-- topology-wise, the existing synchronization network is designed to provide connectivity and distribute timing from the master clock and the RAN nodes (gNBs);
-- it represents a big topological change to connect UPF(s) deployed in CN locations to an existing timing and synchronization network;
-- new (logical, probably also physical) network connectivity has to be realized for traffic between the UPF(s) and the timing and synchronization network; due to security considerations, it should not use existing networks used for (e.g.) Internet traffic;
-- in order to ensure reliable distribution between the CN and RAN, the transport network would need to provide end-to-end support for PTP, which is currently not necessary for the user plane;
-- furthermore, since the PTP traffic is encapsulated, the transport network would need to be able to recognize and support encapsulated PTP traffic, which would probably in turn require an upgrade of the existing transport network.
Furthermore, these drawbacks include - in case of using 5G access stratum-based time distribution - the following:
-- this approach requires the gNB to perform protocol conversion such that the information the gNB conveys to the UE via access stratum is enough for the user equipment to reconstruct PTP packets;
-- not all gNBs may support this functionality;
-- the way in which this is performed is implementation-specific, and not all user equipments may support it or implement it in the same way.

Hence, according to the present invention, it is especially preferred to provide for a radio access network-deployed PTP-5TS functionality on a 5GS or 5G network according to another implementation, i.e. a mobile communication network (consisting of user equipments, (radio) access network and core network), comprising one or more user plane components capable of providing a timing service and a user equipment requesting a timing service, wherein covering any of the following:
-- selection of user plane components by a core network component,
-- selection of a user plane by a radio access network component,
-- such that user plane is selected for PTP traffic and the timing traffic being steered towards the selected user plane function.
It is especially preferred that additionally an operations support system, OSS, component is available such a selection of a user plane function is able to be performed by an OSS function. The user plane component is especially a core network user plane component, especially a user plane function, a radio access network user plane component, especially a CU-UP or DU-UP and the component performing the selection is especially either within disaggregated radio access network (O-RAN), wherein the user plane is a CU-UP (and the component performing the selection is a CU-CP), or within a 5G core, with a user plane function edge (5G core network) (and wherein the user plane is a user plane function and the component performing the selection is a session management function).
Especially the user plane function sends, to a control plane function or to a register function (e.g. network repository function, NRF) parameters related to its 5TS capability, especially parameters related to: support of 5TS, clockAccuracy, clockClass and/or offsetScaledLogVariance.

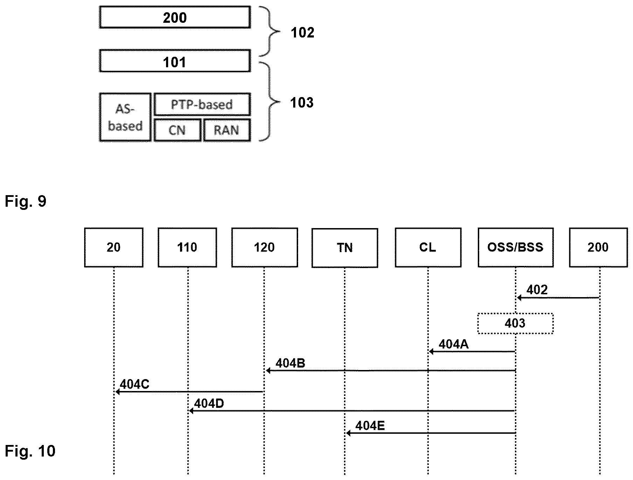

According to the present invention, in order to provide the timing-related service and/or the timing delivery service in a specific part of the at least one mobile communication network 100 - based on the at least one mobile communication network 100 being aware about the implementation or the plurality of implementations of the timing service over 5G functionality regarding the specific part of the at least one mobile communication network 100 - the appropriate implementation or implementations of the timing service over 5G functionality is chosen, regarding the specific part of the at least one mobile communication network 100, by the mobile communication network 100. Hence, it is advantageously possible that - in case that in different parts of the mobile communication network different implementations or possibilities for distributing 5TS timing information (to base station entities and/or to user equipments) are realized or available and in case that a third party requests to use such timing-related services - the mobile communication network 100 is able to provide such services, based on the specific geographical area and/or based on a specific class or group of user equipments indicated in the request, due to its knowledge (or awareness) about the respective implementation for distributing 5TS timing information (of timing-related services and/or of comparatively accurately synchronizing clock entities or functionalities) - especially regarding different parts of the mobile communication network 100 and/or different geographical areas -, either involving the use of a timing-aware packet data unit session anchor entity or functionality 115 or not (i.e. providing the distribution of 5TS timing information via the use of (g)PTP-based time distribution or 5G access stratum-based time distribution), and is thus able to choose the appropriate timing delivery method (or implementation).
Hence, a dynamic provisioning of 5TS service is able to be provided according to the present invention based on a service exposure of the 5TS service.
This is schematically illustrated in Figure 9 that illustrates a somewhat layered model representation of the underlying principle according to the present invention: On a lower layer, the different possible implementations (especially realized in different parts of the mobile communication network or of the plurality of mobile communication networks) for providing timing services or 5TS services are schematically represented by means of indications such as "AS-based", "PTP-based", "CN", "RAN". A medium layer 101 represents the 5TS service exposure. On a top-most layer, a third party 200 or customer is schematically shown; the third party or customer 200 is using the 5TS service exposure 101, or is requesting services (i.e. 5TS services in specific parts of the mobile communication network(s)) based on the 5TS service exposure 101. The 5TS service exposure 101 provides an interface 102 towards the third party or customer 200 where the timing delivery method and (especially implementation-specific) details are abstracted, and based on which interface the third party or customer 200 is able to request 5TS services to be provided by means of a corresponding request. Furthermore, the 5TS service exposure 101 (i.e. the mobile communication network 100) chooses the appropriate timing delivery method (or implementation thereof), wherein the detailed procedure and/or parameters are method-specific/implementation-specific.
Thus, the target of such dynamic provisioning of 5TS service is especially to abstract details of the timing delivery method such that the service can be easily deployed, and is, hence, usable by the third party 200 (e.g. customer of the mobile communication network's operator) without specific knowledge of how a 5GS works. Especially, the customer 200 does not need not know internals of the 5TS system, e.g. 3GPP-related details of how timing is being delivered; rather, only specify timing-related details of the service that they require (e.g. clockAccuracy, clockClass, offsetScaledLogVariance, frequency and/or time traceability flags, primary source (e.g. PRTC/GNSS, enhanced PRTC), maximum error, resiliency),, plus to whom/where (i.e. which user equipments) it should be delivered. Thus, a 5TS service exposure 101 is provided, by the mobile communication network 100, towards the customer or third party 200 such that the timing delivery method and details thereof (especially which one of the different possible implementations is actually used in which part of the mobile communication network 100, or regarding which user equipments) are abstracted.
In Figure 8, an exemplary communication diagram - according to the present invention - is schematically shown that illustrates this provisioning of 5TS services by the mobile communication network 100 and towards the third party 200. The communication diagram involves the user equipment 20, the mobile communication network 100 (i.e. the 5GS) as well as the third party 200.
In Figure 10, a more detailed exemplary communication diagram - according to the present invention - is schematically shown that also illustrates this provisioning of 5TS services by the mobile communication network 100 and towards the third party 200; the communication diagram of Figure 10 is (compared to Figure 8) more detailed as it involves - besides the user equipment 20 and the third party 200 - more details (or more entities or functionalities) of the mobile communication network 100, namely the (radio) access network 110, the core network 120 (or 5GC), the transport network TN, the cloud layer CL, the operations support system / business support system / orchestrator OSS/BSS.
In a first processing step 401 (only represented in Figure 8; not in Figure 10), the 5TS system capabilities (i.e. in which part of the mobile communication network 100 which implementation regarding 5TS timing delivery is available and/or to be used) are known by the 5GS (especially regarding the user equipment 20, the deployed network functions or services, the cloud infrastructure, the transport network, etc.), i.e. especially whether the relevant/which clock functions available at the user equipment 20 and 5GS, and also the synchronization status of the 5GS components (e.g. whether it is well-synchronized, all precision time protocol clock attributes are as expected, etc.).
In a second processing step 402, the third party 200 (especially as a user - especially a business user or business client - of the mobile communication network 100, i.e. a customer, e.g., aiming to provide services based on accurate timing delivery) transmits a 5TS request to provide specific user equipments 20 and/or areas ("area" is considered to be one or a plurality out of the following: a specific geographic area, a specific slice within a network (e.g. identified by a PLMN ID or PLMN ID and NID), a specific PLMN ID (e.g. if the operator of the mobile communication network 100 offers this service to a MVNO), a specific (radio) cell, a specific tracking area(s)) with 5TS timing services by the third party 200 (e.g. a 5TS customer wanting to activate 5TS service for certain users). The receiving network functions (of the mobile communication network 100) considered as input point for the customer request are especially the (or a) network exposure function (NEF), the (or a) operations support system (OSS), the (or a) business support system (BSS) and/or an orchestrator (cf. Figure 10).
The request is especially based on the following parameters (the 5TS customer or third party 200 does not need to know any 3GPP-specifics):
-- users or user equipments for which the 5TS service is to be provided, e.g.: user equipment identifier (e.g. SUPI, IMSI, IP address) and/or the user equipment group identifier (e.g. 5VN group identifier, IP subnet),
-- area(s) for which the service is to be provided, e.g. tracking areas (TAs) to be covered and/or geographical area(s) to be covered,
-- time span when the service is to be provided,
-- clock parameters for 5TS to be supported by the service, e.g. what clock attributes, e.g. as known from IEEE1588/ITU-T G.827x towards the user equipments are supported, or what sub-set of the parameters are supported; such parameters that are explicitly considered are related to one or a plurality of the following parameters: clockAccuracy, clockClass, offsetScaledLogVariance, frequency and time traceability (phase/time traceability information) flags, primary source (e.g. PRTC/GNSS, enhanced PRTC), maximum error, resiliency.
In a third processing step 403, an appropriate 5TS method is chosen such that either
-- all user equipments are served via the same 5TS method, e.g. maximum common denominator fulfilling requirements; or
-- each user equipment is served by the optimum method, e.g. offer best timing service with the minimum being what the customer (via the specific request) requested, prioritize a specific method and, if applicable, use a second one where the (first) specific method is not supported,
wherein especially one or a plurality of the following parameters are selected or are able to be selected:
-- gNB(s) and/or cells to use for the service;
-- frequency/frequencies to be used;
-- 5TS method to be used for each user equipment; the following 5TS methods are especially considered in the dynamic 5TS provisioning according to the present invention, i.e. at least one out of the following methods are chosen or selected: access stratum-based, (g)PTP-based and/or radio access network-based 5TS;
-- user equipments that need to be (re-)configured;
-- network instances that are available;
-- deployment locations of new network instances, especially UP network instances
-- network instances that need to be deployed.
In a fourth processing step 404, regarding the deployment and/or the configuration of the 5GS, according to the present invention the following steps (or, at least, one or a plurality thereof) are especially considered, cf. the sub-steps 404A to 404E of the fourth processing step shown in Figure 10:
-- 404A: deployment on the infrastructure layer (e.g. cloud layer CL) of network functions or services and/or radio access network instances (or network nodes) on specific locations (e.g. edge location);
-- 404B: configuration of one or more core network 120 components (e.g. 5GC network functions or services) such that 5TS service is activated for specific user equipments, e.g. updating subscriber data in the UDM/UDR/HSS such that the 5TS service is activated for the user equipments and/or configuring existing network functions or services to serve specific network slice(s) and/or DNN(s) (data network names) to deliver 5TS-related traffic (e.g. PTP data packets), especially such that their updated network function profile allows the instances to be found via the network repository function (NRF);
-- 404C: configuration of the user equipment 20 (shown as triggered by the 5GC, but it can be indirectly triggered by OSS/BSS also);
-- 404D: configuration of radio access network 110 component(s) such that timing SIBs required for 5TS (SIB9) are activated for the specific user equipments and/or on the specific areas;
-- 404E: configure the transport network TN such that all deployed instances (of, especially, the core network and/or of the radio access network) requiring timing and synchronization are connected to the synchronization network.
In a fifth processing step 405 (likewise only represented in Figure 8; not in Figure 10), the 5GS configures and/or activates the 5TS service in the respective user equipment 20 (and/or in the plurality of concerned user equipments) as per 5TS method.

Regarding charging aspects (especially for a timing service with an underlying heterogeneity, and, especially, in a mobile communication network, i.e. opposed to a fixed-network-based timing coverage, which is comparatively easily able to be charged, merely (or predominantly) based on the number of physical connections), as the present invention proposes to realize an abstraction layer, it is especially and advantageously considered to base charging on one or a plurality of the following:
-- the area covered, e.g. 'measured' in the number and/or the extension of respective radio cells and/or surface (e.g. measured in km²), especially regardless of number of active user equipments, which would enable a charging model based on a rather "flat fee" (or lump sum charging) for a given coverage area;
-- the number of end devices, especially user equipments, e.g. per activated SIM card/subscription, which would enable a charging model rather based on (device) coverage, and rather independent of location;
-- a combination of both above mentioned charging models, e.g. involving unlimited devices (user equipments) within a campus/local specific network location/coverage area and a device-based charging outside of said area;
-- additionally, such mentioned charging models are able to be combined with the required maximum error/resiliency, e.g. a more precise timing service would require of better coverage and/or frequency deployment compared to a more coarse coverage.

Hence, according to the present invention, it is advantageously possible to provide for a dynamic 5TS service provisioning, wherein a mobile communication network 100, serving one or more user equipments and comprising control functions, among them a mapping function, wherein a customer requests the mapping function to enable 5TS service to one or more UEs.
The mobile network comprising a control plane function (e.g. SMF, CU-CP, DU-CP, RU) or user plane function (e.g. 5TS UPF or 5TS CU-UP) sending to a control plane function or to a register function (e.g. NRF) parameters related to its 5TS capability, especially parameters related to:
-- support of 5TS and if yes, of what type, especially whether (g)PTP-based, Access Stratum-based
-- clockAccuracy
-- clockClass
-- offsetScaledLogVariance
Furthermore, the mobile communication network 100 especially comprises one or more computing nodes capable of hosting instances providing control plane and/or user plane functionality, wherein a computing node sends to a control plane function or to a register function (e.g. network repository function, NRF) parameters related to their 5TS capability, especially parameters related to:
-- support of 5TS-capable networking
-- support of precision time protocol
-- whether the computing node is currently connected to a PTP network and if yes, information related to the synchronization network it is connected to.
Furthermore, the mapping function selects, for a user equipment, one of the available 5TS modes.
Furthermore, the mapping function, according to the present invention, triggers at least one of the following:
-- the selection of an instantiated user plane and/or control plane function, especially gNB(s) and/or (radio) cells to use
-- the selection of an available computing node
-- the deployment of a user equipment, user plane and/or control plane function on an available computing node
-- configuration of user equipment, an instantiated user plane function, control plane function and/or computing node, especially related to, frequency/frequencies to be used. Especially, the mapping function is a TSN AF, NEF, OSS, BSS, and/or orchestrator.
Furthermore, according to the present invention, the inclusion of at least one of the following parameters in the 3rd party request is considered:
-- clockAccuracy
-- clockClass
-- offsetScaledLogVariance
-- frequency and time traceability (phase/time traceability information) flags
-- primary source, e.g. PRTC/GNSS, enhanced PRTC
-- maximum error
-- resiliency
Furthermore, charging is especially based on coverage, number of subscribers, maximum error and/or resiliency.

## Claims

1. Method for providing a timing-related service and/or a timing delivery service using at least one mobile communication network (100),
wherein the at least one mobile communication network (100) serves a plurality of user equipments (20),
wherein the at least one mobile communication network (100) comprises, or is associated or assigned to, at least one synchronization entity or functionality (125), wherein the at least one synchronization entity or functionality (125) transmits and/or receives synchronization messages in order to provide, regarding the plurality of user equipments (20), at least one implementation of a timing service over 5G functionality,
wherein, in order to provide the timing-related service and/or the timing delivery service in a specific part of the at least one mobile communication network (100), the method comprises the following steps:
-- the at least one mobile communication network (100) is aware about the implementation or the plurality of implementations of the timing service over 5G functionality regarding the specific part of the at least one mobile communication network (100),
-- regarding the specific part of the at least one mobile communication network (100) the appropriate implementation or implementations of the timing service over 5G functionality is chosen by the mobile communication network (100).

2. Method according to claim 1, wherein the timing-related service and/or the timing delivery service is provided, by the at least one mobile communication network (100), to a third party,
wherein, by means of a specific request, the third party requests the timing-related service and/or the timing delivery service to be provided by the at least one mobile communication network (100),
wherein especially the specific request refers to the specific part of the at least one mobile communication network (100),
wherein especially the timing-related service and/or the timing delivery service is provided as a timing-as-a-service functionality, wherein especially a comparatively accurate time base is able to be distributed by the plurality of user equipments (20).

3. Method according to one of the preceding claims, wherein the specific request and/or the specific part of the at least one mobile communication network (100) refers to at least one of the following:
-- a specific geographical area,
-- a specific network slice within a public land mobile network and/or referring to a public land mobile network identifier, or a plurality thereof,
-- a specific public land mobile network identifier, or a plurality thereof,
-- a specific radio cell, or a plurality thereof,
-- a specific tracking area, or a plurality thereof.

4. Method according to one of the preceding claims, wherein the specific request refers to a specific class or group of the plurality of user equipments (20) and wherein, in order to provide the timing-related service and/or the timing delivery service to the specific class or group of the plurality of user equipments (20), the method comprises the following steps:
-- the at least one mobile communication network (100) is aware about the capabilities of the plurality of user equipments (20),
-- regarding the specific class or group of the plurality of user equipments (20) the appropriate implementation or implementations of the timing service over 5G functionality is chosen by the mobile communication network (100).

5. Method according to one of the preceding claims, wherein the specific request comprises or is related to at least one of the following:
-- clockAccuracy,
-- clockClass,
-- offsetScaledLogVariance,
-- frequency and time traceability (phase/time traceability information) flags,
-- primary source, e.g. PRTC/GNSS, enhanced PRTC,
-- maximum error,
-- resiliency.

6. Method according to one of the preceding claims, wherein the specific request is received by a network exposure function, NEF, of the at least one mobile communication network (100) and/or by an operations support system, OSS, of the at least one mobile communication network (100),
wherein especially charging, in view of the specific request, is based on coverage, number of subscribers, maximum error and/or resiliency.

7. Method according to one of the preceding claims, wherein the at least one mobile communication network (100) comprises, besides a core network (120), an access network (110) comprising a plurality of base station entities (111, 112), wherein each one of the plurality of user equipments (20) is served by at least one base station entity (111),
wherein providing the timing-related service and/or the timing delivery service by means of providing at least one implementation of the timing service over 5G functionality involves the possibility to comparatively accurately synchronize clock entities or functionalities by means of exchanging synchronization messages, especially with the at least one synchronization entity or functionality (125).

8. Method according to one of the preceding claims, wherein the implementation of a timing service over 5G functionality at least involves one of the following implementations:
-- the exchange, in order to provide the timing service over 5G functionality, of the synchronization messages using a timing distribution network that is separated, especially physically or logically separated, from the transport network transmitting the user plane traffic,
-- the exchange, in order to provide the timing service over 5G functionality, of the synchronization messages is access stratum-based, especially based on access stratum control plane communication between base station entities and the plurality of user equipments (20), especially using, or based on, system information block, SIB, especially SIB9,
-- the exchange, in order to provide the timing service over 5G functionality, of the synchronization messages is (g)PTP-based, especially based on and/or using the precision time protocol, (g)PTP,
-- the exchange, in order to provide the timing service over 5G functionality, of the synchronization messages based on core network-based user plane communication,
-- the exchange, in order to provide the timing service over 5G functionality, of the synchronization messages based on a timing-aware packet data unit session anchor entity or functionality (115), especially at or as part of or co-deployed with a base station entity serving a concerned user equipment.

9. Method according to one of the preceding claims, wherein the at least one mobile communication network (100) - being aware about
-- the implementation or the plurality of implementations of the timing service over 5G functionality regarding the specific part of the at least one mobile communication network (100), especially related to the network nodes or instances serving the specific part of the at least one mobile communication network (100) and/or
-- the capabilities of the plurality of user equipments (20), especially regarding the implementation or the plurality of implementations of the timing service over 5G functionality -
involves a mapping function, especially involving or generating one or more mapping actions, especially one or more mapping actions related to delivering the timing service over 5G functionality - especially via each implementation of the timing service over 5G functionality - for one or a plurality of the following:
-- gNB(s) and/or cells to use,
-- one frequency or more frequencies to be used,
-- user equipments or network nodes that need to be (re-)configured,
-- network nodes or instances that are available,
-- deployment locations of new network instances, especially user plane network instances,
-- network nodes or instances that need to be deployed.

10. System or mobile communication network (100) for providing a timing-related service and/or a timing delivery service using at least one mobile communication network (100),
wherein the at least one mobile communication network (100) serves a plurality of user equipments (20),
wherein the at least one mobile communication network (100) comprises, or is associated or assigned to, at least one synchronization entity or functionality (125), wherein the at least one synchronization entity or functionality (125) transmits and/or receives synchronization messages in order to provide, regarding the plurality of user equipments (20), at least one implementation of a timing service over 5G functionality,
wherein, in order to provide the timing-related service and/or the timing delivery service in a specific part of the at least one mobile communication network (100), the system of mobile communication network (100) is configured such that:
-- the at least one mobile communication network (100) is aware about the implementation or the plurality of implementations of the timing service over 5G functionality regarding the specific part of the at least one mobile communication network (100),
-- regarding the specific part of the at least one mobile communication network (100) the appropriate implementation or implementations of the timing service over 5G functionality is chosen by the mobile communication network (100).

11. User equipment (20) for being operated with or as part of or connected to a system or to a mobile communication network (100) according to claim 10 and/or for being used in a method according to one of claims 1 to 9.

12. Program comprising a computer readable program code which, when executed on a computer or on a synchronization entity or functionality (125) or on a network node of the core network (120) of the mobile communication network (100) or on a network node of the access network (110) of the mobile communication network (100), especially a timing-aware packet data unit session anchor entity or functionality (115), or on a base station entity (111, 112) or on a user equipment (20), and/or in part on a synchronization entity or functionality (125) and/or in part on a network node of the core network (120) of the mobile communication network (100) and/or in part on a network node of the access network (110) of the mobile communication network (100), especially a timing-aware packet data unit session anchor entity or functionality (115) and/or in part on a base station entity (111, 112) and/or in part on a user equipment (20), causes the computer or the synchronization entity or functionality (125) or the network node of the core network (120) of the mobile communication network (100) or the network node of the access network (110) of the mobile communication network (100), especially the timing-aware packet data unit session anchor entity or functionality (115) or the base station entity (111, 112) or the user equipment (20), to perform a method according one of claims 1 to 9.

13. Computer-readable medium comprising instructions which, when executed on a computer or on a synchronization entity or functionality (125) or on a network node of the core network (120) of the mobile communication network (100) or on a network node of the access network (110) of the mobile communication network (100), especially a timing-aware packet data unit session anchor entity or functionality (115), or on a base station entity (111, 112) or on a user equipment (20), and/or in part on a synchronization entity or functionality (125) and/or in part on a network node of the core network (120) of the mobile communication network (100) and/or in part on a network node of the access network (110) of the mobile communication network (100), especially a timing-aware packet data unit session anchor entity or functionality (115) and/or in part on a base station entity (111, 112) and/or in part on a user equipment (20), causes the computer or the synchronization entity or functionality (125) or the network node of the core network (120) of the mobile communication network (100) or the network node of the access network (110) of the mobile communication network (100), especially the timing-aware packet data unit session anchor entity or functionality (115) or the base station entity (111, 112) or the user equipment (20), to perform a method according one of claims 1 to 9.

## Amended claims

### Amended claims in accordance with Rule 137(2) EPC.

1. Method for providing a timing-related service and/or a timing delivery service using at least one mobile communication network (100),
wherein the at least one mobile communication network (100) serves a plurality of user equipments (20), **characterized in that**,
the at least one mobile communication network (100) comprises, or is associated or assigned to, at least one synchronization entity or functionality (125), wherein the at least one synchronization entity or functionality (125) transmits and/or receives synchronization messages in order to provide, regarding the plurality of user equipments (20), at least one implementation of a timing service over 5G functionality,
wherein, the method for providing the timing-related service and/or the timing delivery service in a specific part of the at least one mobile communication network (100) comprises the following steps:
-- the at least one mobile communication network (100) is aware about the implementation or the plurality of implementations of the timing service over 5G functionality regarding the specific part of the at least one mobile communication network (100),
-- regarding the specific part of the at least one mobile communication network (100) the appropriate implementation or implementations of the timing service over 5G functionality is chosen by the mobile communication network (100) wherein a network-based logic is implemented, realizing:
-- selecting the most suitable mechanism to deliver the requested service based on, e.g., network topology and/or network availability and/or user equipment capability,
-- the subscriber changes required to realize the chosen timing service over 5G functionality, and
-- the instance deployment and configuration realizing the timing service over 5G functionality
wherein the implementation of a timing service over 5G functionality at least involves one of the following implementations:
-- the exchange, in order to provide the timing service over 5G functionality, of the synchronization messages using a timing distribution network that is physically or logically separated from the transport network transmitting the user plane traffic,
-- the exchange, in order to provide the timing service over 5G functionality, of the synchronization messages is access stratum-based, especially based on access stratum control plane communication between base station entities and the plurality of user equipments (20), using, or based on, system information block, SIB, especially SIB9,
-- the exchange, in order to provide the timing service over 5G functionality, of the synchronization messages is (g)PTP-based, based on and/or using the precision time protocol, (g)PTP,
-- the exchange, in order to provide the timing service over 5G functionality, of the synchronization messages based on core network-based user plane communication,
-- the exchange, in order to provide the timing service over 5G functionality, of the synchronization messages based on a timing-aware packet data unit session anchor entity or functionality (115), at or as part of or co-deployed with a base station entity serving a concerned user equipment,
wherein the specific part of the at least one mobile communication network (100) refers to at least one of the following:
-- a specific geographical area,
-- a specific network slice within a public land mobile network and/or referring to a public land mobile network identifier, or a plurality thereof,
-- a specific public land mobile network identifier, or a plurality thereof,
-- a specific radio cell, or a plurality thereof,
-- a specific tracking area, or a plurality thereof.

2. Method according to claim 1, wherein the timing-related service and/or the timing delivery service is provided, by the at least one mobile communication network (100), to a customer of the mobile communication network's operator,
wherein, by means of a specific request, the customer of the mobile communication network's operator requests the timing-related service and/or the timing delivery service to be provided by the at least one mobile communication network (100),
wherein the specific request refers to the specific part of the at least one mobile communication network (100),
wherein the timing-related service and/or the timing delivery service is provided as a timing-as-a-service functionality, wherein a comparatively accurate time base is able to be distributed by the plurality of user equipments (20).

3. Method according to claim 2, wherein the specific request of the at least one mobile communication network (100) refers to at least one of the following:
-- a specific geographical area,
-- a specific network slice within a public land mobile network and/or referring to a public land mobile network identifier, or a plurality thereof,
-- a specific public land mobile network identifier, or a plurality thereof,
-- a specific radio cell, or a plurality thereof,
-- a specific tracking area, or a plurality thereof.

4. Method according to one of claims 2 to 3, wherein the specific request refers to a specific class or group of the plurality of user equipments (20) and wherein, in order to provide the timing-related service and/or the timing delivery service to the specific class or group of the plurality of user equipments (20), the method comprises the following steps:
-- the at least one mobile communication network (100) is aware about the capabilities of the plurality of user equipments (20),
-- regarding the specific class or group of the plurality of user equipments (20) the appropriate implementation or implementations of the timing service over 5G functionality is chosen by the mobile communication network (100) being aware about the capabilities of the plurality of user equipments (20).

5. Method according to one of claims 2 to 4, wherein the specific request comprises or is related to at least one of the following:
-- clockAccuracy,
-- clockClass,
-- offsetScaledLogVariance,
-- frequency and time traceability (phase/time traceability information) flags,
-- primary source, e.g. PRTC/GNSS, enhanced PRTC,
-- maximum error,
-- resiliency.

6. Method according to one of claims 2 to 5, wherein the specific request is received by a network exposure function, NEF, of the at least one mobile communication network (100) and/or by an operations support system, OSS, of the at least one mobile communication network (100),
wherein charging, in view of the specific request, is based on coverage, number of subscribers, maximum error and/or resiliency.

7. Method according to one of the preceding claims, wherein the at least one mobile communication network (100) comprises, besides a core network (120), an access network (110) comprising a plurality of base station entities (111, 112), wherein each one of the plurality of user equipments (20) is served by at least one base station entity (111),
wherein providing the timing-related service and/or the timing delivery service by means of providing at least one implementation of the timing service over 5G functionality involves comparatively accurately synchronizing clock entities or functionalities by means of exchanging synchronization messages with the at least one synchronization entity or functionality (125).

8. Method according to one of claims 4 to 7, wherein the at least one mobile communication network (100) being aware about
-- the implementation or the plurality of implementations of the timing service over 5G functionality regarding the specific part of the at least one mobile communication network (100) related to the network nodes or instances serving the specific part of the at least one mobile communication network (100) and/or
-- the capabilities of the plurality of user equipments (20) regarding the implementation or the plurality of implementations of the timing service over 5G functionality
involves a mapping function, involving or generating or more mapping actions related to delivering the timing service over 5G functionality via each implementation of the timing service over 5G functionality for one or a plurality of the following:
-- gNB(s) and/or cells to use,
-- one frequency or more frequencies to be used,
-- user equipments or network nodes that need to be (re-)configured,
-- network nodes or instances that are available,
-- deployment locations of new network instances, especially user plane network instances,
-- network nodes or instances that need to be deployed,
wherein the mapping function is a TSN AF, NEF, OSS, BSS, and/or orchestrator.

9. Mobile communication network (100) for providing a timing-related service and/or a timing delivery service using at least one mobile communication network (100), wherein the at least one mobile communication network (100) serves a plurality of user equipments (20), **characterized in that**,
the at least one mobile communication network (100) comprises, or is associated or assigned to, at least one synchronization entity or functionality (125), wherein the at least one synchronization entity or functionality (125) transmits and/or receives synchronization messages in order to provide, regarding the plurality of user equipments (20), at least one implementation of a timing service over 5G functionality,
wherein, in order to provide the timing-related service and/or the timing delivery service in a specific part of the at least one mobile communication network (100), the mobile communication network (100) is configured such that:
-- the at least one mobile communication network (100) is aware about the implementation or the plurality of implementations of the timing service over 5G functionality regarding the specific part of the at least one mobile communication network (100),
-- regarding the specific part of the at least one mobile communication network (100) the appropriate implementation or implementations of the timing service over 5G functionality is chosen by the mobile communication network (100),
, wherein a network-based logic is implemented, realizing:
-- selecting the most suitable mechanism to deliver the requested service based on, e.g., network topology and/or network availability and/or user equipment capability,
-- the subscriber changes required to realize the chosen timing service over 5G functionality, and
-- the instance deployment and configuration realizing the timing service over 5G functionality
wherein the implementation of a timing service over 5G functionality at least involves one of the following implementations:
-- the exchange, in order to provide the timing service over 5G functionality, of the synchronization messages using a timing distribution network that is physically or logically separated from the transport network transmitting the user plane traffic,
-- the exchange, in order to provide the timing service over 5G functionality, of the synchronization messages is access stratum-based, especially based on access stratum control plane communication between base station entities and the plurality of user equipments (20), using, or based on, system information block, SIB, especially SIB9,
-- the exchange, in order to provide the timing service over 5G functionality, of the synchronization messages is (g)PTP-based, based on and/or using the precision time protocol, (g)PTP,
-- the exchange, in order to provide the timing service over 5G functionality, of the synchronization messages based on core network-based user plane communication,
-- the exchange, in order to provide the timing service over 5G functionality, of the synchronization messages based on a timing-aware packet data unit session anchor entity or functionality (115), at or as part of or co-deployed with a base station entity serving a concerned user equipment
wherein the specific part of the at least one mobile communication network (100) refers to at least one of the following:
-- a specific geographical area,
-- a specific network slice within a public land mobile network and/or referring to a public land mobile network identifier, or a plurality thereof,
-- a specific public land mobile network identifier, or a plurality thereof,
-- a specific radio cell, or a plurality thereof,
-- a specific tracking area, or a plurality thereof.

10. User equipment (20) configured for being operated with or as part of or connected to a mobile communication network (100) according to claim 9 and/or configured for being used in a method according to one of claims 1 to 8.

11. Program comprising a computer readable program code which, when executed on a computer or on a synchronization entity or functionality (125) or on a network node of the core network (120) of the mobile communication network (100) or on a network node of the access network (110) of the mobile communication network (100), especially a timing-aware packet data unit session anchor entity or functionality (115), or on a base station entity (111, 112) or on a user equipment (20), causes the computer or the synchronization entity or functionality (125) or the network node of the core network (120) of the mobile communication network (100) or the network node of the access network (110) of the mobile communication network (100), especially the timing-aware packet data unit session anchor entity or functionality (115) or the base station entity (111, 112) or the user equipment (20), to perform a method according one of claims 1 to 8.

12. Computer-readable medium comprising instructions which, when executed on a computer or on a synchronization entity or functionality (125) or on a network node of the core network (120) of the mobile communication network (100) or on a network node of the access network (110) of the mobile communication network (100), especially a timing-aware packet data unit session anchor entity or functionality (115), or on a base station entity (111, 112) or on a user equipment (20), causes the computer or the synchronization entity or functionality (125) or the network node of the core network (120) of the mobile communication network (100) or the network node of the access network (110) of the mobile communication network (100), especially the timing-aware packet data unit session anchor entity or functionality (115) or the base station entity (111, 112) or the user equipment (20), to perform a method according one of claims 1 to 8.
